# EUROPEAN PATENT APPLICATION

(11) **EP 4 825 284 A1**
(43) Date of publication of application: **21.10.2026**
(21) Application number: 25171344.2
(22) Date of filing: 17.04.2025
(51) Int. Cl.: A47J 42/40, A47J 42/42

(54) **COFFEE GRINDER WITH CLEAN DISPENSE COFFEE GRINDER BIN**

(71) Applicant: Midea Group Co., Ltd., Foshan, Guangdong 528311 (CN)
(72) Inventor: Fowler, Simon, Foshan (CN)
(74) Representative: Ran, Handong

(57) **Abstract**

A coffee grinder includes a clean dispense coffee grinder bin with an upwardly-facing inlet (104), a downwardly-facing outlet (106), an internal funnel (108) that conveys ground coffee received through the upwardly-facing inlet (104) to the downwardly-facing outlet (106), and a closure mechanism (110) that, when in an open configuration, allows ground coffee received through the upwardly-facing inlet (104) to be dispensed into a brewing receptacle through the downwardly-facing outlet (106).

## Description

### Background

Coffee is a beverage made from roasted coffee beans, and has long been one of the most popular drinks in the world. Numerous devices and processes for making coffee have been developed, with most incorporating some variation on bringing water into contact with ground coffee beans to extract water soluble components from the ground coffee beans that give coffee its distinctive taste. However, roasted coffee beans can have numerous soluble components that impart different types of flavors that can be pleasing or displeasing to different palates, so variations in brewing processes can significantly impact the flavor of the resulting coffee.

Two primary types of coffee brewing devices in common use today are generally referred to as espresso machines and drip coffee makers. Espresso machines force hot pressurized water relatively quickly through packed and finely ground coffee beans to generate a highly concentrated, but low volume type of coffee generally referred to as espresso. Drip coffee makers, on the other hand, rely primarily on gravity rather than pressure, and drip heated water onto a brew basket of more coarsely ground coffee beans to allow the water to seep through the coffee grounds to extract the flavor-producing components therefrom. Drip coffee makers also generally incorporate a disposable or reusable filter in the brew basket such that the coffee grounds are retained in the brew basket while the coffee is fed by gravity into a cup or larger container disposed below the brew basket.

Particularly with drip coffee makers, a number of factors can greatly impact a coffee flavor profile, including, for example, the amounts of ground coffee and water that are used, the grind size used to grind the coffee beans, the temperature of the water, and the amount of time the water contacts the ground coffee, among others. Specifically with respect to the coffee itself, additional factors impacting the coffee flavor profile include the length of time since the coffee was roasted and the length of time since it was ground, as oxidation due to exposure to the air and degassing of carbon dioxide from the roasted coffee gradually causes the coffee to gradually become stale and flavorless. Grinding coffee greatly accelerates these processes due to the increased surface area of ground coffee compared to whole coffee beans, and as such, many consumers prefer to purchase whole coffee beans rather than pre-ground coffee, and grind immediately prior to brewing.

Grinding coffee at home, however, can be messy, as static caused by friction generated during the grinding process can cause ground coffee to become statically charged, causing some grounds to spill out onto the countertop and/or surfaces of the coffee grinder and/or coffee maker as coffee grounds are dispensed into a container or bin by the grinder and later poured into a filter or brew basket for brewing. In addition, static effects may also cause some grounds to cling to the container or bin into which the grounds are expelled, even after the grounds have been poured into the filter or brew basket for brewing.

While various attempts have been made to mitigate the effects of static generated by the grinding process, the effects of static have still not been completely mitigated. Therefore, a need continues to exist in the art for a cleaner manner of grinding and dispensing coffee into a filter or brew basket.

### Summary

The herein-described embodiments address these and other problems associated with the art by providing a coffee grinder including a clean dispense coffee grinder bin with an upwardly-facing inlet, a downwardly-facing outlet, an internal funnel that conveys ground coffee received through the upwardly-facing inlet to the downwardly-facing outlet, and a closure mechanism that, when in an open configuration, allows ground coffee received through the upwardly-facing inlet to be dispensed into a brewing receptacle through the downwardly-facing outlet.

Therefore, consistent with one aspect of the invention, a coffee grinder may include a bean hopper configured to store a quantity of coffee beans, a grinder outlet configured to dispense ground coffee, a grinding mechanism disposed intermediate the bean hopper and the grinder outlet and configured to grind coffee beans from the bean hopper and dispense ground coffee through the grinder outlet, and a coffee grinder bin sized and configured to be removably positioned underneath the grinder outlet to receive the ground coffee dispensed through the grinder outlet. The coffee grinder bin may include a container body defining an upwardly-facing inlet configured to receive the ground coffee dispensed through the grinder outlet when the coffee grinder bin is positioned underneath the grinder outlet and a downwardly-facing outlet configured to dispense the ground coffee received through the upwardly-facing inlet, a funnel disposed within the container body and configured to convey the ground coffee received through the upwardly-facing inlet to the downwardly-facing outlet, the funnel narrowing in cross-section in a direction from the upwardly-facing inlet to the downwardly-facing outlet, and a closure mechanism movable between closed and open configurations. In the closed configuration, the closure mechanism substantially blocks the downwardly-facing outlet to retain the ground coffee received through the upwardly-facing inlet within the container body, and in the open configuration, the closure mechanism substantially uncovers the downwardly-facing outlet to allow the ground coffee received through the upwardly-facing inlet to be dispensed through the downwardly-facing outlet.

Some embodiments may also include a housing supporting the grinder outlet and defining a bin recess configured to support the coffee grinder bin with the upwardly-facing inlet opposing the grinder outlet. Also, in some embodiments, the grinder outlet and the upwardly-facing inlet having matching cross-sectional profiles. Further, in some embodiments, the container body is sized and configured such that the grinder outlet and the upwardly-facing inlet contact one another when the coffee grinder bin is disposed in the bin recess.

In some embodiments, the container body includes an upper portion and a lower portion configured for relative rotation therebetween about an axis of rotation, the funnel and the upwardly-facing inlet are disposed in the upper portion and the downwardly-facing outlet is disposed in the lower portion, and rotation of the upper portion relative to the lower portion about the axis of rotation moves the closure mechanism between the closed and open configurations. In addition, in some embodiments, the downwardly-facing outlet is radially offset from the axis of rotation, and the closure mechanism includes a radially-offset funnel outlet of the funnel that is aligned with the downwardly-facing outlet when the closure mechanism is in the open configuration, and is unaligned with the downwardly-facing outlet when the closure mechanism is in the closed configuration.

In some embodiments, the downwardly-facing outlet and the funnel outlet each have a circular cross-section, and the funnel has a conical surface truncated by the funnel outlet. In addition, in some embodiments, the downwardly-facing outlet and the funnel outlet each have a circular segment profile and the funnel has a conical surface truncated by a substantially planar surface. Moreover, in some embodiments, the substantially planar surface has an angle of inclination of at least about 40 degrees and the downwardly-facing outlet has an opening size of at least about 2.5 square inches.

In some embodiments, the lower portion includes a stop that limits relative rotation between the upper and lower portions to within a range of rotational angles that incorporates the open and closed configurations of the closure mechanism. Moreover, in some embodiments, the coffee grinder bin includes a removable lid and the upwardly-facing inlet is disposed on the removable lid. In some embodiments, the upper and lower portions are removably coupled to one another through a snap fit coupling. In addition, in some embodiments, the upper and lower portions are removably coupled to one another through a keyed coupling. In some embodiments, the closure mechanism is biased to the closed configuration.

Moreover, in some embodiments, the funnel includes a funnel outlet opposing the downwardly-facing outlet and the closure mechanism includes a door that is interposed between the funnel outlet and the downwardly-facing outlet when the closure mechanism is in the closed configuration. Also, in some embodiments, the door is pivotable about a pivot axis and includes a bias mechanism that biases the door to a closed position that blocks the downwardly-facing outlet. In some embodiments, the closure mechanism further includes an actuator configured to pivot the door from the closed position to an open position that uncovers the downwardly-facing outlet. In addition, in some embodiments, the door includes a cam surface, and the actuator includes a button configured to move along a button axis to engage the cam surface and thereby pivot the door from the closed position to the open position.

Consistent with another aspect of the invention, a coffee grinder bin may include a container body sized and configured to be removably positioned underneath a grinder outlet of a coffee grinder to receive the ground coffee dispensed through the grinder outlet, the container body defining an upwardly-facing inlet configured to receive the ground coffee dispensed through the grinder outlet and a downwardly-facing outlet configured to dispense the ground coffee received through the upwardly-facing inlet, a funnel disposed within the container body and configured to convey the ground coffee received through the upwardly-facing inlet to the downwardly-facing outlet, the funnel narrowing in cross-section in a direction from the upwardly-facing inlet to the downwardly-facing outlet, and a closure mechanism movable between closed and open configurations. In the closed configuration, the closure mechanism substantially blocks the downwardly-facing outlet to retain the ground coffee received through the upwardly-facing inlet within the container body, and in the open configuration, the closure mechanism substantially uncovers the downwardly-facing outlet to allow the ground coffee received through the upwardly-facing inlet to be dispensed through the downwardly-facing outlet.

Consistent with another aspect of the invention, a method of dispensing coffee grounds may include positioning a coffee grinder bin in a grinding position disposed underneath a grinder outlet of a coffee grinder, the coffee grinder bin including a container body defining an upwardly-facing inlet and a downwardly-facing outlet and a closure mechanism that substantially blocks the downwardly-facing outlet when in a closed configuration, grinding coffee beans with the coffee grinder when the coffee grinder bin is positioned underneath the grinder outlet and the closure mechanism is in the closed configuration to dispense ground coffee out of the grinder outlet and into the container body through the upwardly-facing inlet, removing the coffee grinder bin from the grinding position and positioning the coffee grinder bin over a brewing receptacle, and actuating the closure mechanism to move the closure mechanism from the closed configuration to an open configuration that substantially uncovers the downwardly-facing outlet such that the ground coffee dispensed into the container body is dispensed through the downwardly-facing outlet and into the brewing receptacle.

Other embodiments may include various methods for making and/or using any of the aforementioned constructions.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described example embodiments of the invention. This summary is merely provided to introduce a selection of concepts that are further described below in the detailed description, and is not intended to identify key or essential features of the claimed subject matter, nor is it intended to be used as an aid in limiting the scope of the claimed subject matter.

### Brief Description of the Drawings

FIGURE 1 is a front elevational view of a coffee grinder and a drip coffee maker consistent with some embodiments of the invention.
FIGURE 2 is a block diagram of an example control system for the coffee grinder and the drip coffee maker of Fig 1.
FIGURE 3 is a perspective view of a coffee grinder bin suitable for use with the coffee grinder and the drip coffee maker of Fig. 1, in a closed configuration.
FIGURE 4 is a perspective view of the coffee grinder bin of Fig. 3, in an open configuration.
FIGURE 5 is a perspective view of the coffee grinder bin of Fig. 3, in a separated configuration.
FIGURE 6 is a partial side elevational view of the coffee grinder bin of Fig. 3.
FIGURE 7 is a bottom plan view of the coffee grinder bin of Fig. 3.
FIGURE 8 is a partial perspective view of another coffee grinder bin suitable for use with the coffee grinder and the drip coffee maker of Fig. 1.
FIGURE 9 is a perspective view of yet another coffee grinder bin suitable for use with the coffee grinder and the drip coffee maker of Fig. 1.
FIGURE 10 is a perspective view of still another coffee grinder bin suitable for use with the coffee grinder and the drip coffee maker of Fig. 1.
FIGURE 11 is a cross-sectional view of the coffee grinder bin of Fig. 10, taken along lines 11-11 thereof.

### Detailed Description

The embodiments described hereinafter are directed in part to a coffee grinder and clean dispense coffee grinder bin therefor that is capable of receiving ground coffee dispensed by the coffee grinder and thereafter dispensing the ground coffee through a downwardly-facing outlet into a filter, brew basket, or other brewing receptacle suited for brewing coffee. Prior to a detailed discussion of the clean dispense coffee grinder bin, however, a coffee maker and grinder suitable for utilizing such a bin is described below.

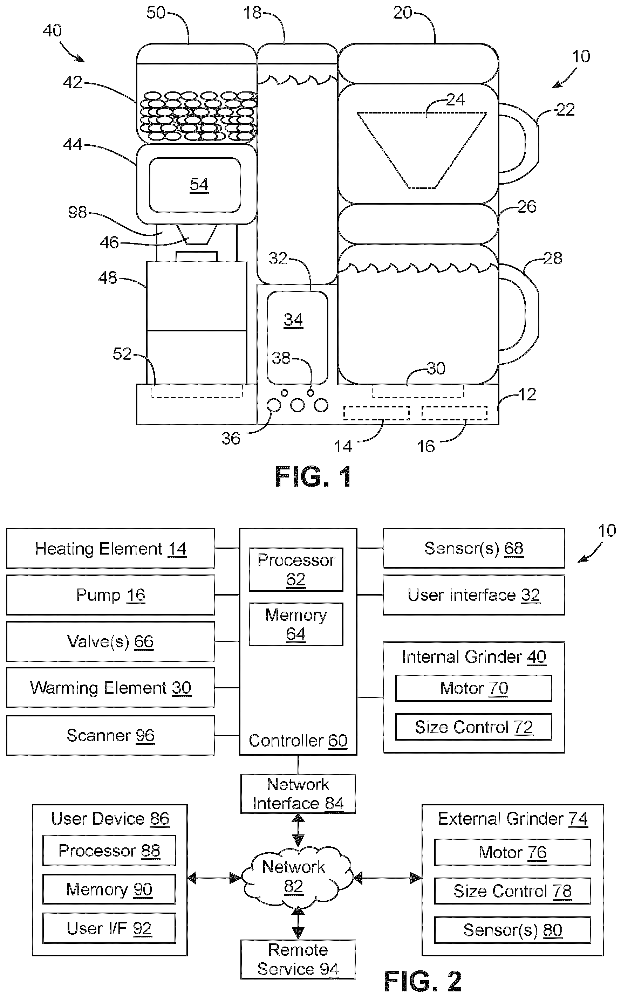

Now turning to the drawings, wherein like parts are denoted by like numbers throughout the several views, Fig. 1 illustrates a drip coffee maker 10 consistent with some embodiments of the invention. Drip coffee maker 10 may include a base or housing 12 within which may be included various components utilized in the brewing of coffee, e.g., a heating element 14, and in some instances, a water pump 16, for heating and conveying water from a water reservoir 18 to a water dispenser 20 disposed above a brew basket 22 within which may be disposed a quantity of ground coffee, and in many instances, a disposable or reusable filter.

Brew basket 22 in some embodiments may be removable and/or may incorporate a lid or cover providing access to the brew basket 22 when adding ground coffee and a filter prior to brewing and/or when removing the ground coffee and filter after brewing. In some embodiments, a filter support 24 may be used to support a filter, and the coffee grounds contained therein, during a drip coffee brewing operation. Water dispenser 20 in some embodiments may include a shower head or other suitable mechanism for dispensing heated water evenly across the top surface of the ground coffee disposed in brew basket 22 during brewing.

Disposed beneath brew basket 22 is a coffee dispenser 26 that collects the brewed coffee that passes through the filter in brew basket 22 to dispense the brewed coffee into a container via gravity feed, e.g., a carafe 28, which is some instances may be a glass carafe or a thermal carafe, although brewing may be permitted into other types of containers, e.g., mugs or cups. Coffee dispenser 26 may, in some instances, also include an automatic shut-off valve that shuts off dispensing during a brewing operation if the carafe is removed by a consumer. In some instances, a warming element 30 may also be provided in order to maintain a desirable coffee temperature after brewing.

A user interface 32, e.g., including a graphical and/or touchscreen display 34, one or more physical controls 36 (e.g., buttons, knobs, sliders, etc.) and/or one or more indicators 38 (e.g., lights, alphanumeric displays, etc.), may also be disposed on base 12 to enable a user to interact with the drip coffee maker 10.

In some embodiments, a coffee grinder 40 may also be integrated with and/or interfaced with drip coffee maker 10. Coffee grinder 40, for example, may be integrally disposed in base or housing 12 in some embodiments, while in other embodiments, coffee grinder 40 may be removably coupled to or positionable proximate base or housing 12 and interfaced through one or more wires, one or more contacts, or a wireless network to enable commands and/or data to be communicated therebetween. Coffee grinder 40 may also be powered by drip coffee maker 10 or may be separately powered in various embodiments. In still other embodiments, no coffee grinder may be used, or to the extent a consumer grinds coffee for use with drip coffee maker 10, he or she does so using a completely separate coffee grinder. Coffee grinder 40 in some embodiments may be complete separate from drip coffee maker 10.

Coffee grinder 40 may include a bean hopper 42 positioned over a burr or blade grinding mechanism 44 that outputs ground coffee from a grinder chute or outlet 46 into a bin or container 48, which, as will be discussed in greater detail below, may be implemented as a clean dispense coffee grinder bin consistent with the invention. Bean hopper 42 may also include a lid or cover 50 for allowing external access to add roasted coffee beans to the bean hopper. Grinding mechanism 44 may be configured to support variable grind sizes in some embodiments, e.g., through manual or electronically-controlled adjustments to the grinding mechanism. In addition, in some embodiments, a scale 52 may be disposed in coffee grinder 40 to measure the weight of the coffee dispensed through grinder chute or outlet 46. User interaction with coffee grinder 40 may be provided through a dedicated interface 54 in some embodiments, while in other embodiments, user interface 32 of drip coffee maker 10 may also control coffee grinder 40.

With further reference to Fig. 2, drip coffee maker 10 may be under the control of a controller 60 that receives inputs from a number of components and drives a number of components in response thereto. Controller 60 may, for example, include one or more processors 62 and a memory 64 within which may be stored program code or instructions for execution by the one or more processors 62. The memory may be embedded in controller 60, but may also be considered to include volatile and/or non-volatile memories, cache memories, flash memories, programmable read-only memories, read-only memories, etc., as well as memory storage physically located elsewhere from controller 60, e.g., in a mass storage device or on a remote computer interfaced with controller 60. Controller 60 may also be implemented as a microcontroller in some embodiments, and as such these terms are used interchangeably herein. Controller 60 may also include discrete circuit logic in some embodiments, e.g., including passive and/or active circuit components.

As shown in Fig. 2, controller 60 may be interfaced with various components, including the aforementioned heating element 14, pump 16, warming element 30, user interface 32, and coffee grinder 40, as well as one or more electronically-controlled valves 66 and one or more sensors 68.

In some embodiments, for example, electronically-controlled valves 66 may be disposed upstream and/or downstream of brew basket 22 to effectively control the amount of time that water contacts the ground coffee in the brew basket. An upstream valve 66, for example, may be used to control the flow of heated water into the brew basket 22. A downstream valve 66 may be used to control the flow of coffee out of brew basket 22 into carafe 28 or another container, and in some embodiments, such a valve may also be fully closeable to prevent coffee from dripping from the brew basket whenever carafe 28 is removed. A downstream valve 66 may also, in some embodiments, enable alternate types of brewing processes, e.g., cold brewing processes where unheated water is steeped in coffee grounds for a relatively long duration. While in some embodiments upstream and/or downstream valves 66 may be used, in other embodiments, no electronically-controllable valves may be used and/or one or both of valves 66 may be mechanically controlled or may be omitted entirely. For the purposes of this disclosure, each of pump 16 and valves 66 may be considered to be a flow control device insofar as each may be used in the control of water flow through the brew basket (i.e., either into the brew basket, out of the brew basket, or both).

A wide variety of different types of sensors 68 may also be used, including for example, temperature sensors, fluid pressure sensors, fluid level sensors, flowmeters, presence sensors (e.g., to detect the proper positioning of a carafe, a brew basket, a water reservoir, a grinder hopper, etc.), position sensors, weight sensors, etc. Other sensors that may be suitable in monitoring the status of and otherwise controlling the operation of drip coffee maker 10 will be appreciated by those of ordinary skill having the benefit of the instant disclosure.

As noted above, where coffee grinder 40 is implemented as an internal coffee grinder, controller 60 may be configured to control various components of the coffee grinder directly, e.g., a motor 70 that drives the grinding process (e.g., by rotating one burr cutting element relative to another burr cutting element), and where electronic control of grind size is supported, a size control 72. Size control in other embodiments may be a manual adjustment.

Alternatively, where drip coffee maker 10 is interfaced with an external coffee grinder (e.g., external coffee grinder 74 of Fig. 2, shown including a motor 76, optional size control 78, and one or more sensors 80), controller 60 may communicate with the external coffee grinder over a network 82 through a network interface 84 to instruct the external coffee grinder to grind coffee, e.g., to grind a desired amount (e.g., based on weight or duration) and/or to grind at a specified grind size.

Network interface 84, for example, may represent one or more network interfaces suitable for interfacing with external devices via wired and/or wireless networks such as Ethernet, Bluetooth, NFC, cellular and other suitable networks. It may also be desirable, for example, to interface with one or more user devices 86, e.g., a consumer's mobile phone, which may include one or more processors 88, a memory 90 and a user interface 92) to enable a customer to control drip coffee maker 10 through the user device 86. It may also be desirable to interface with one or more remote services 94, e.g., to obtain firmware updates, to access remote databases with recipes, coffee bean information, to persist user preferences, to provide maintenance or diagnostic functionality, etc. Moreover, in some embodiments, at least a portion of controller 60 may be implemented externally, e.g., within a mobile device, a cloud computing environment, etc., such that at least a portion of the functionality described herein is implemented within the portion of the controller that is externally implemented.

In some embodiments, controller 60 may operate under the control of an operating system and may execute or otherwise rely upon various computer software applications, components, programs, objects, modules, data structures, etc. In addition, controller 60 may also incorporate hardware logic to implement some or all of the functionality disclosed herein. Further, in some embodiments, the operational sequences performed by controller 60 to implement the embodiments disclosed herein may be implemented using program code including one or more instructions that are resident at various times in various memory and storage devices, and that, when read and executed by one or more hardware-based processors, perform the operations embodying desired functionality. Moreover, in some embodiments, such program code may be distributed as a program product in a variety of forms, and that the invention applies equally regardless of the particular type of computer readable media used to actually carry out the distribution, including, for example, non-transitory computer readable storage media. In addition, it will be appreciated that the various operations described herein may be combined, split, reordered, reversed, varied, omitted, parallelized and/or supplemented with other techniques known in the art, and therefore, the invention is not limited to the particular sequences of operations described herein.

It will be appreciated that drip coffee maker 10 may be configured in a wide variety of other manners and may omit one or more of the components discussed above and/or may incorporate other components not explicitly discussed above. For example, as illustrated in Fig. 2, it may be desirable in some embodiments to utilize a bar code or other scanner 96 to enable coffee bean or ground coffee bar codes to be scanned to identify a particular coffee bean or ground coffee being used for a coffee brewing operation and thereby enable the coffee brewing operation to be specifically tailored for a particular coffee bean or ground coffee. Such functionality could also be supported in user device 86, e.g., using a camera of the user device to capture an image of a bar code.

Numerous additional variations and modifications to the drip coffee maker illustrated in Figs. 1-2 will be apparent to one of ordinary skill in the art, as will become apparent from the description below. Therefore, the invention is not limited to the specific implementations discussed herein.

### Coffee Grinder With Clean Dispense Coffee Grinder Bin

Conventionally, the bins or containers used for collecting ground coffee from a coffee grinder take the form of a cup or other open-top container, and as a result, ground coffee falls into the open top of the container during grinding, and when it is desirable to dispense the ground coffee into a filter or brew basket of a drip coffee maker, the cup is inverted over the filter or brew basket to pour the ground coffee into the filter or brew basket. However, due to the static electricity that builds up during the grinding process, ground coffee particles can become electrically charged, which can cause some coffee particles to spill out onto the countertop, surfaces of the coffee grinder and/or surfaces of the coffee maker and/or cling to the coffee grinder bin.

Embodiments consistent with the invention, on the other hand, may utilize a clean dispense coffee grinder bin that includes an upwardly-facing inlet for receiving coffee grounds during grinding, as well as a downwardly-facing outlet for dispensing the coffee grounds into a filter or brew basket of a coffee maker. A closure mechanism is incorporated into the clean dispense coffee grinder bin in order to selectively close the downwardly-facing outlet prior to dispensing into the filter or brew basket, such that ground coffee may be transferred from a coffee grinder to a filter or brew basket in a manner such that the electrically charged ground coffee is substantially housed within the interior of the coffee grinder bin until the closure mechanism is actuated to dispense the ground coffee through the bottom of the coffee grinder bin, thereby reducing the amount of ground coffee that spills out onto the countertop or onto the surfaces of the coffee grinder and/or coffee maker. In addition, in some embodiments, to the extent that any ground coffee clings to the interior surfaces of the coffee grinder bin, the coffee grinder bin may be separable to allow for easy cleaning of the coffee grinder bin to remove any remaining ground coffee.

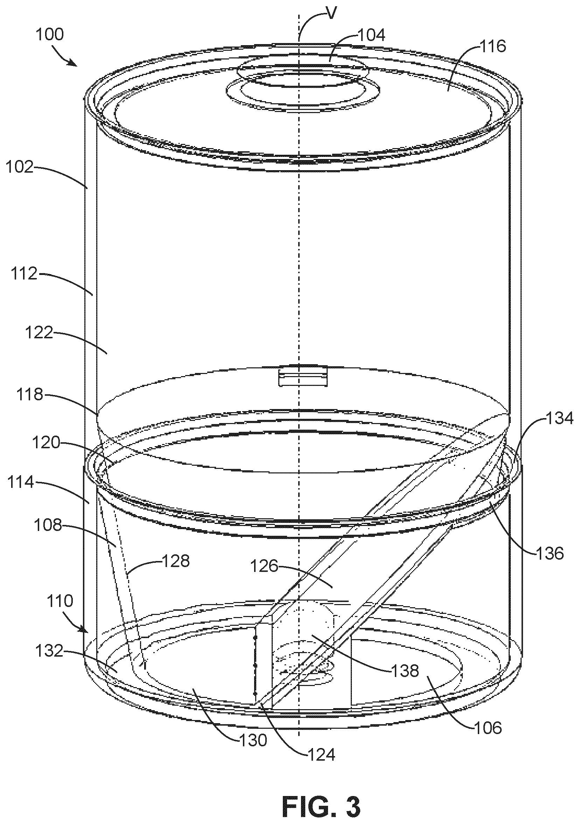

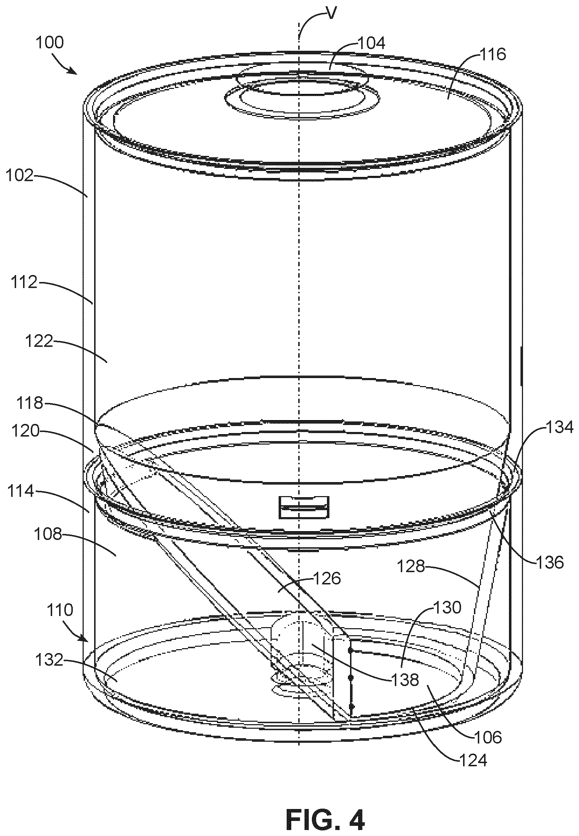

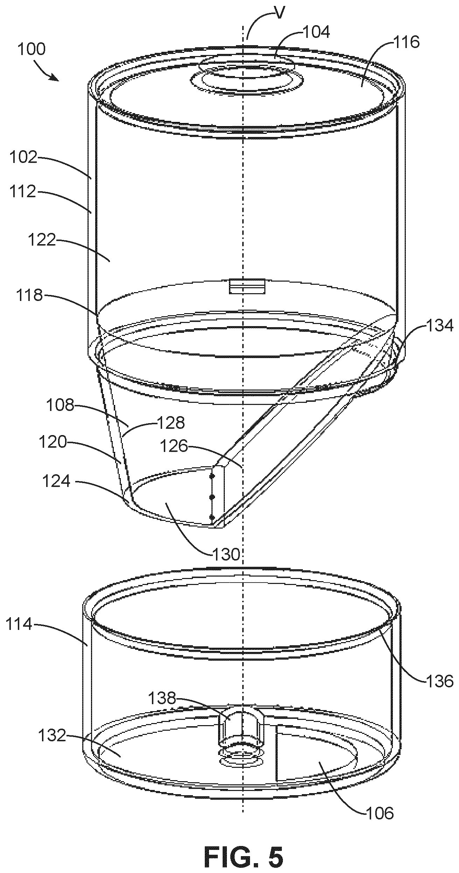

Figs. 3-7, for example, illustrate one example embodiment of a clean dispense coffee grinder bin 100 consistent with the invention, including a container body 102 that defines an upwardly-facing inlet 104 and a downwardly-facing outlet 106, and includes an integrated funnel 108 disposed within the interior of the container body and configured to convey ground coffee received through the upwardly-facing inlet 104 to the downwardly-facing outlet 106 when a closure mechanism 110 is configured in an open configuration (Fig. 4). In this embodiment, closure mechanism 110 is implemented in part through the relative rotation of upper and lower portions 112, 114 of container body 102 about a substantially vertical axis V between two different relative angular relationships, respectively illustrated in Fig. 3 (closed configuration) and Fig. 4 (open configuration). As such, axis V may also be considered to be an axis of rotation for coffee grinder bin 100, and it will be appreciated that in this embodiment, downwardly-facing outlet 106 may be considered to be radially offset from axis V.

In addition, in the illustrated embodiment, upwardly-facing inlet 104 is disposed on a lid 116 of container body 102, which is removably secured to upper portion 112 of container body 102. Lid 116 may be removable, for example, to provide access to the interior of upper portion 112, e.g., for cleaning purposes. In other embodiments, however, lid 116 may be integrally formed with upper portion 112, and in some embodiments, upper portion 112 may be formed of multiple portions that are removably secured to one another through a coupling 118, e.g., a funnel portion 120 that defines funnel 108 and a standoff portion 122 that elevates upwardly-facing inlet 104 to orient the inlet opposite grinder outlet 46, as well as provide addition volume for the storage of ground coffee and additional surface area for gripping by a user. In different embodiments, coupling 118 may be a snap fit coupling, a friction coupling, a keyed coupling, a tabbed coupling, a threaded coupling, or any other suitable coupling for removably joining together multiple portions of a container body. Likewise, if lid 116 is removably secured to upper portion 112, it may simply rest in a groove of upper portion 112, or may be secured through any of the aforementioned types of couplings as described above for coupling 118. In still other embodiments, no lid may be used, and container body 102 may simply incorporate an open top that defines the upwardly-facing inlet 104.

Funnel 108 in the illustrated embodiment narrows in cross-section (i.e., in a plane substantially transverse to axis V) in a direction from the upwardly-facing inlet 104 to the downwardly-facing outlet 106, and terminates in a neck 124, which in the illustrated embodiment is offset from axis V. Funnel 108 moreover is defined by a substantially planar surface 126 that truncates a conical inner wall 128. Closure mechanism 110 includes a funnel outlet 130 defined by neck 124 of funnel 108 that, in the illustrated embodiment, is substantially the same size and shape as downwardly-facing outlet 106, and is radially offset from axis V substantially the same distance as downwardly-facing outlet 106 such that when closure mechanism 110 is in an open configuration (as illustrated in Fig. 4), funnel outlet 130 and downwardly-facing outlet 106 are substantially aligned to allow for ground coffee to be dispensed from coffee grinder bin 100. However, when closure mechanism 110 is in a closed configuration (as illustrated in Fig. 3), funnel outlet 130 is unaligned with downwardly-facing outlet 106, and instead opposes a solid bottom surface 132 of lower portion 114, thereby retaining ground coffee within upper portion 112.

In the illustrated embodiment, upper and lower portions 112, 114 include respective couplers 134, 136 that removably secure upper and lower portions 112, 114 to one another while also allowing for relative rotation therebetween about axis V. In this embodiment, for example, couplers 134, 136 may be configured to provide a snap fit coupling, e.g., by including cooperative annular grooves and ridges on couplers 134 and/or 136 that allow for attachment and removal through motion generally along axis V. In other embodiments, however, other couplings may be used, e.g., various types of friction couplings, tabbed couplings, keyed couplings, threaded couplings, or any other suitable couplings for removably joining together multiple portions of a container body and/or allowing for relative rotation between the multiple portions.

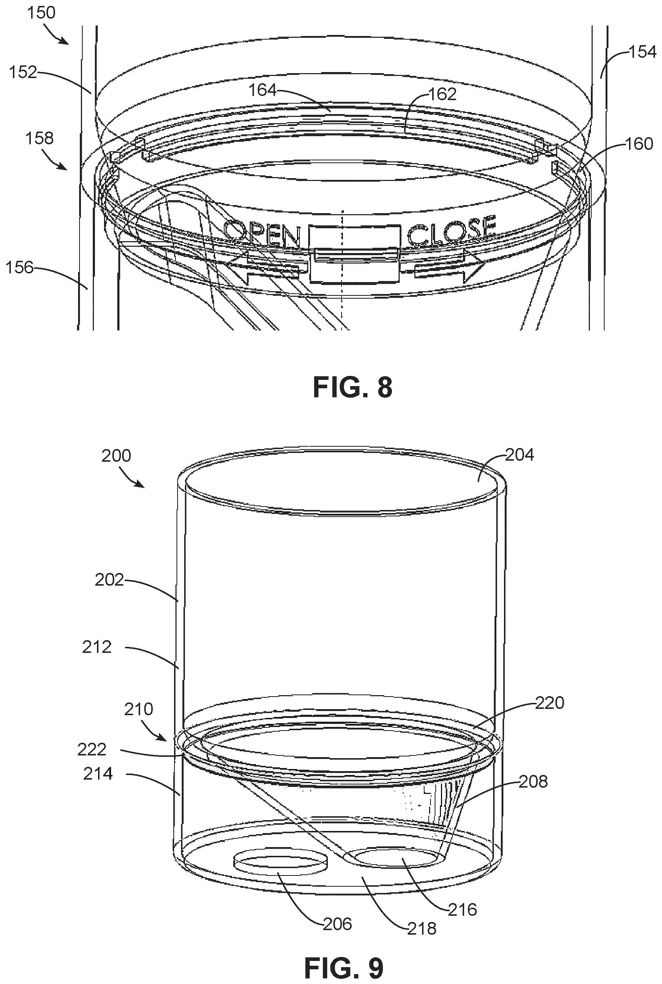

Fig. 8, for example, illustrates a portion of another clean dispense coffee grinder bin 150, which includes a container body 152 with upper and lower portions 154, 156 joined by a keyed coupling 158 having one or more breaks 160 in a pair of annular ridges 162, 164 respectively defined on upper and lower portions 154, 156 that allow for upper and lower portions 154, 156 to be separated from one another when in a predetermined relative angular relationship, but that otherwise prevent separation when upper and lower portions 154, 156 are not in the predetermined relative angular relationship.

Returning to clean dispense coffee grinder bin 100 of Figs. 3-7, it may also be desirable to incorporate a stop 138 into lower portion 114 to restrict relative rotation between upper and lower portions 112, 114 to a range of rotational angles that incorporates the open and closed configurations of closure mechanism 110, as well as to facilitate alignment of funnel outlet 130 and downwardly-facing outlet 106 when the closure mechanism is in the open configuration. In the illustrated embodiment, for example, stop 138 may be configured as an integrally molded bar formed on bottom surface 132 of lower portion 114 and sized and configured to contact an underside of planar surface 126 of funnel 108 in each of the open and closed configurations. Other manners of restricting a range of relative rotation between the upper and lower portions 112, 114 may be used in other embodiments. It will also be appreciated that a bias mechanism may also be incorporated into some embodiments to bias closure mechanism 110 to the closed configuration, thereby reducing the likelihood of dispensing ground coffee into the clean dispense coffee grinder bin when the closure mechanism is in an open configuration.

In the illustrated embodiment, the various components of clean dispense coffee grinder bin 100 are formed of the same plastic material (e.g., polypropylene (PP) or polyethylene terephthalate glycol (PETG)), and may be transparent or translucent in some embodiments in order to facilitate viewing of the contents of the bin. In other embodiments, however, various other plastics, metals, or other materials, or combinations thereof, may be used, so the invention is not limited to the specific construction described herein. Furthermore, container body 102 generally takes the form of a substantially right cylinder in the illustrated embodiment; however, in other embodiments, other shapes and sizes may be used.

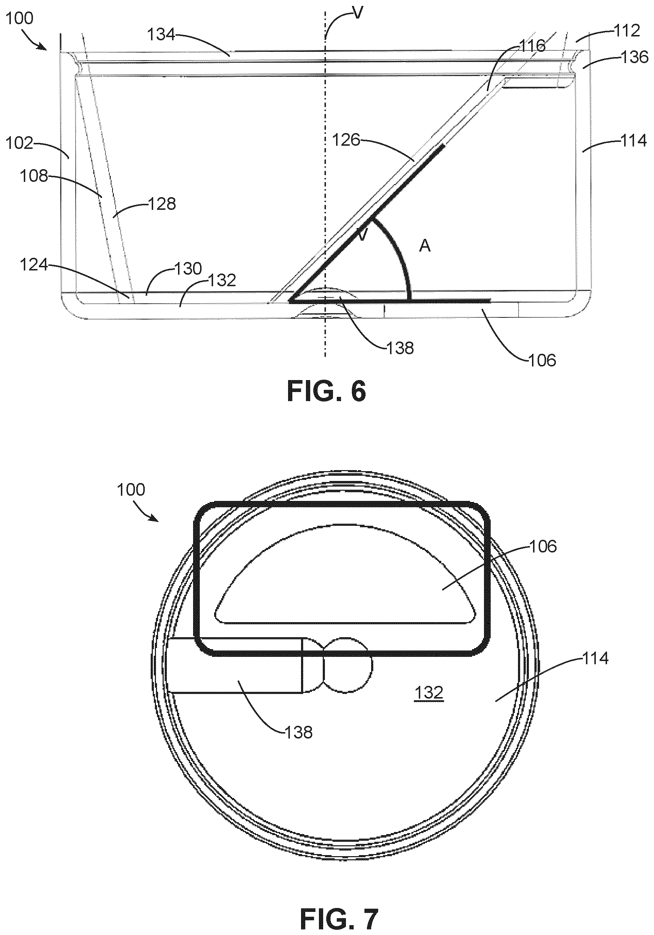

In addition, in the illustrated embodiment, and with specific reference to Figs. 6-7, the configurations of the funnel 108 and the downwardly-facing outlet 106 may be controlled to optimize dispensing of ground coffee for use with a drip coffee maker. In particular, in the illustrated embodiment, planar surface 126 is configured with an angle of inclination A (Fig. 6) that is at least about 40 degrees, while funnel outlet 130 and downwardly-facing outlet 106 are configured with a circular segment profile having an opening size of at least about 2.5 square inches. It has been found, in particular, that angle of inclination and opening size can both affect the quality of dispensing in an interdependent manner, with the angle of inclination generally needing to increase as the opening size decreases in order to minimize the amount of ground coffee that is retained in a coffee grinder bin after dispensing. In addition, it has been found that the minimum acceptable angle of inclination can vary with grind size and roast level, as darker roasts (which are more oily) and finer grind sizes are generally more resistant to dispensing, and in general necessitate the use of a steeper angle of inclination.

In operation, for example with a drip coffee maker such as drip coffee maker 10 of Fig. 1, coffee grinder bin 100 is initially positioned in a grinding position, e.g., within a bin recess 98 defined by housing 12 and supported on a support surface such as that provided by scale 52, and with closure mechanism 110 in the closed configuration. In some embodiments, it may be desirable to configure upwardly-facing inlet 104 to have a matching (i.e., substantially the same) cross-sectional profile as grinder outlet 46, or alternatively with a smaller or larger cross-sectional profile, to minimize the amount of ground coffee that is expelled outside of coffee grinder bin 100. In addition, it is generally desirable to size container body 102 relative to coffee grinder 40 to position upwardly-facing inlet 104 in close proximity to grinder outlet 46. In some embodiments, upwardly-facing inlet 104 may contact grinder outlet 46, upwardly-facing inlet 104 may form a seal with grinder outlet 46, and/or one of grinder outlet 46 and upwardly-facing inlet may project some distance into the other of grinder outlet 46 and upwardly-facing inlet 104 to further minimize the amount of ground coffee that is expelled outside of coffee grinder bin 100.

Grinding may then be commenced, such that coffee grinder 40 dispenses a quantity of ground coffee out of grinder outlet 46 and into container body 102 through upwardly-facing inlet 104. Thereafter, coffee grinder bin 100 may be removed from coffee grinder 40 and positioned over a brewing receptacle used to house the ground coffee during brewing, e.g., a disposable or reusable filter, a brew basket, a pour over device, a portafilter, or other receptacle suited for the particularly type of brewing to be performed. For drip coffee maker 10, for example, it may be desirable to open or remove brew basket 22 and place a disposable or reusable filter in the brew basket, and then position coffee grinder bin 100 over the filter in the brew basket.

Then, closure mechanism 110 may be actuated, e.g., by rotating upper portion 112 of container body 102 relative to lower portion 114, to place closure mechanism in the open position. At this point, funnel outlet 130 is aligned with downwardly-facing outlet 106, and the ground coffee stored within container body 102 is dispensed through downwardly-facing outlet 106 and into the brewing receptacle. Closure mechanism 110 may then be actuated to return to the closed configuration, and coffee grinder bin 100 may be returned to the grinding position, and brewing may then commence. It will be appreciated that during this process, the ground coffee is substantially contained within coffee grinder bin 100 until it is dispensed into the brewing receptacle, and the coffee grinder bin 100 need not be inverted in order to dispense the ground coffee into the brewing receptacle. Moreover, much of the static charge imparted to the ground coffee by the grinding process is contained within coffee grinder bin 100 during this process, thereby further minimizing the amount of ground coffee that is allowed to collect on surfaces external to the coffee grinder bin. Furthermore, to the extent that some amount of ground coffee remains within the coffee grinder bin after dispensing, the separable nature of upper and lower portions 112, 114 and lid 116 allows for quick and easy cleanup, e.g., via rinsing the components in a sink.

It will be appreciated that other coffee grinder bin designs may be used in other embodiments. Fig. 9, for example, illustrates another example embodiment of a clean dispense coffee grinder bin 200 consistent with the invention, including a container body 202 that defines an upwardly-facing inlet 204 defined by an open top of the container body and a downwardly-facing outlet 206, and includes an integrated funnel 208 disposed within the interior of the container body and configured to convey ground coffee received through the upwardly-facing inlet 204 to the downwardly-facing outlet 206 when a closure mechanism 210 is configured in an open configuration. In this embodiment, closure mechanism 210 is implemented in part through the relative rotation of upper and lower portions 212, 214 of container body 202 about a substantially vertical axis between two different relative angular relationships, similar to coffee grinder bin 100 of Figs. 3-7. Also, both downwardly-facing outlet 206 and a funnel outlet 216 of funnel 208 are radially offset from the substantially vertical axis.

Funnel 208 is configured with a truncated conical surface that terminates in funnel outlet 216, and each of downwardly-facing outlet 206 and funnel outlet 216 are substantially circular in shape, and similarly sized and shaped, as well as similarly radially offset, such that when closure mechanism 210 is in an open configuration, downwardly-facing outlet 206 and funnel outlet 216 are substantially aligned to allow for ground coffee to be dispensed from coffee grinder bin 200. However, when closure mechanism 210 is in a closed configuration (as illustrated in Fig. 9), funnel outlet 216 opposes a solid bottom surface 218 of lower portion 214, thereby retaining ground coffee within upper portion 212.

In the illustrated embodiment, upper and lower portions 212, 214 include respective couplers 220, 222 that removably secure upper and lower portions 212, 214 to one another while also allowing for relative rotation therebetween, e.g., via a snap fit coupling or any of the other couplings discussed above.

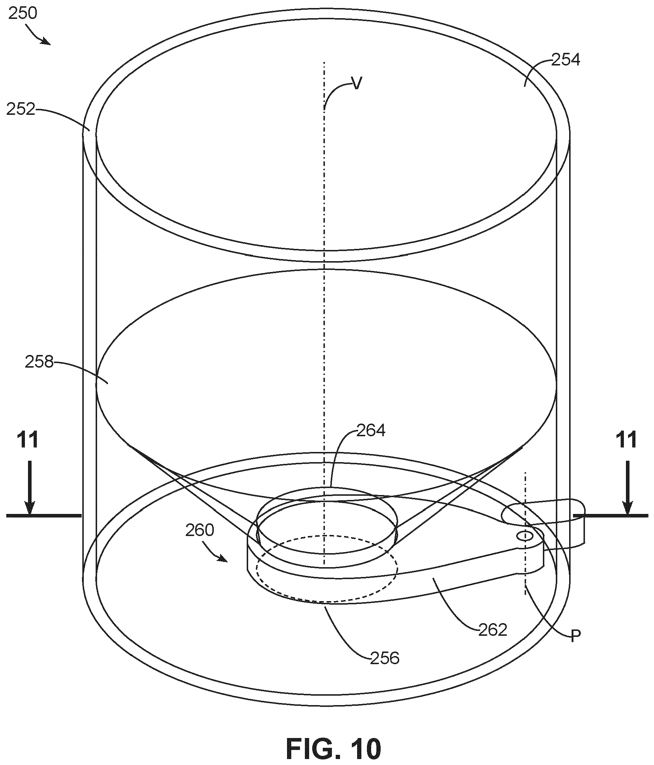

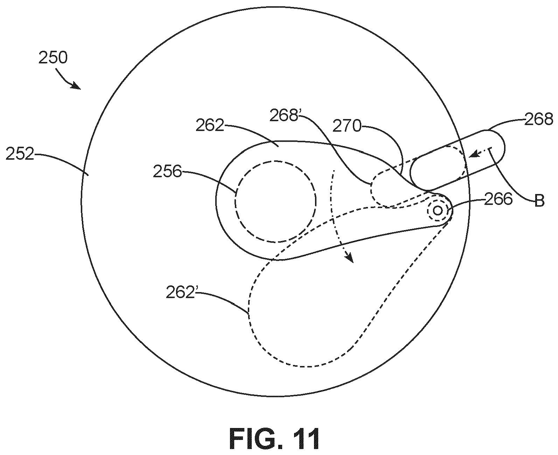

In addition, other closure mechanisms may be used in other embodiments. Figs. 10-11, for example, illustrate a clean dispense coffee grinder bin 250 having a container body 252, an upwardly-facing inlet 254 defined by an open top of container body 252, a downwardly-facing outlet 256, a funnel 258 and a closure mechanism 260. Closure mechanism 260 in the illustrated embodiment includes a door 262 that pivots about a pivot axis P between a closed position (illustrated in Fig. 10) and an open position (illustrated at 262' in Fig. 11) to selectively uncover downwardly-facing outlet 256 and allow ground coffee in funnel 258 to be dispensed through a funnel outlet 264 and out of downwardly-facing outlet 256. In addition, both downwardly-facing outlet 254 and funnel outlet 264 in this embodiment are centered on a substantially vertical axis V of container body 252, and door 262 is interposed between downwardly-facing outlet 254 and funnel outlet 264 when in the closed position.

Door 262 is biased to the closed position by a spring 266 and is engaged by a button 268 that is movable linearly about a button axis B and that engages a cam surface 270 on door 262. As illustrated in Fig. 11, depression of button 268 to the position illustrated at 268' rotates door 262 about pivot axis P from the closed position to the open position 262', thereby moving the closure mechanism 260 from the closed configuration to the open configuration. It will be appreciated that other closure mechanisms may be utilized in other embodiments, e.g., using a door that incorporates some degree of linear movement (e.g., a sliding door or gate) and/or a button, lever, or other actuator that incorporates some degree of rotational movement. Among other benefits, closure mechanism 260 allows, in some embodiments, for one-handed dispensing of coffee grounds from coffee grinder bin 250, thereby freeing a user's other hand to appropriately position a brewing receptacle during dispensing.

Various additional modifications may be made to the illustrated embodiments without departing from the spirit and scope of the invention. For example, while the embodiments discussed herein focus on a coffee grinder and coffee grinder bin suitable for use with a drip coffee maker, those of ordinary skill having the benefit of the instant disclosure will appreciate that a coffee grinder and/or coffee grinder bin consistent with the invention may be utilized in connection with other types of coffee makers, including manual coffee makers, as well as in association with ground coffee having various grind sizes, roast levels, etc. For example, a coffee grinder and/or coffee grinder bin consistent with the invention may be used (or adapted) to grind coffee for use with various types of coffee brewing processes, including, but not limited to, espresso, cold brew, French press, pour over, percolator, etc.

As another example, positioning of a clean dispense coffee grinder bin in a coffee grinder may be facilitated by the use of a magnetic coupling between the coffee grinder bin and the coffee grinder, e.g., by positioning one or more magnets or ferromagnetic elements on the bottom of the coffee grinder bin and on a support surface of the coffee grinder to align an upwardly-facing inlet of the coffee grinder bin with a grinder outlet of the coffee grinder.

It will also be appreciated that, while certain features may be discussed herein in connection with certain embodiments and/or in connection with certain figures, unless expressly stated to the contrary, such features generally may be incorporated into any of the embodiments discussed and illustrated herein. Moreover, features that are disclosed as being combined in some embodiments may generally be implemented separately in other embodiments, and features that are disclosed as being implemented separately in some embodiments may be combined in other embodiments, so the fact that a particular feature is discussed in the context of one embodiment but not another should not be construed as an admission that those two embodiments are mutually exclusive of one another. Various additional modifications may be made to the illustrated embodiments consistent with the invention. Therefore, the invention lies in the claims hereinafter appended.

## Claims

1. A coffee grinder (40), comprising:
a bean hopper (42) configured to store a quantity of coffee beans;
a grinder outlet (46) configured to dispense ground coffee;
a grinding mechanism (44) disposed intermediate the bean hopper (42) and the grinder outlet (46) and configured to grind coffee beans from the bean hopper (42) and dispense ground coffee through the grinder outlet (46); and
a coffee grinder bin (100) sized and configured to be removably positioned underneath the grinder outlet (46) to receive the ground coffee dispensed through the grinder outlet (46), the coffee grinder bin (100) including:
a container body (102) defining an upwardly-facing inlet (104) configured to receive the ground coffee dispensed through the grinder outlet (46) when the coffee grinder bin (100) is positioned underneath the grinder outlet (46) and a downwardly-facing outlet (106) configured to dispense the ground coffee received through the upwardly-facing inlet (104);
a funnel (108) disposed within the container body (102) and configured to convey the ground coffee received through the upwardly-facing inlet (104) to the downwardly-facing outlet (106), the funnel (108) narrowing in cross-section in a direction from the upwardly-facing inlet (104) to the downwardly-facing outlet (106); and
a closure mechanism (110) movable between closed and open configurations, wherein in the closed configuration, the closure mechanism (110) substantially blocks the downwardly-facing outlet (106) to retain the ground coffee received through the upwardly-facing inlet (104) within the container body (102), and in the open configuration, the closure mechanism (110) substantially uncovers the downwardly-facing outlet (106) to allow the ground coffee received through the upwardly-facing inlet (104) to be dispensed through the downwardly-facing outlet (106).

2. The coffee grinder (40) of claim 1, further comprising a housing (12) supporting the grinder outlet (46) and defining a bin recess (98) configured to support the coffee grinder bin (100) with the upwardly-facing inlet (104) opposing the grinder outlet (46).

3. The coffee grinder (40) of claim 2, wherein the grinder outlet (46) and the upwardly-facing inlet (104) having matching cross-sectional profiles.

4. The coffee grinder (40) of claim 2 or 3, wherein the container body (102) is sized and configured such that the grinder outlet (46) and the upwardly-facing inlet (104) contact one another when the coffee grinder bin (100) is disposed in the bin recess (98).

5. The coffee grinder (40) of any one of claims 1 to 4, wherein the container body (102) includes an upper portion (112) and a lower portion (114) configured for relative rotation therebetween about an axis of rotation, wherein the funnel (108) and the upwardly-facing inlet (104) are disposed in the upper portion (112) and the downwardly-facing outlet (106) is disposed in the lower portion (114), and wherein rotation of the upper portion (112) relative to the lower portion (114) about the axis of rotation moves the closure mechanism (110) between the closed and open configurations.

6. The coffee grinder (40) of claim 5, wherein the downwardly-facing outlet (106) is radially offset from the axis of rotation; and
the closure mechanism (110) includes a radially-offset funnel outlet of the funnel (108) that is aligned with the downwardly-facing outlet (106) when the closure mechanism (110) is in the open configuration, and is unaligned with the downwardly-facing outlet (106) when the closure mechanism (110) is in the closed configuration.

7. The coffee grinder (40) of claim 6, wherein the downwardly-facing outlet (106) and the funnel outlet (130) each have a circular cross-section, and the funnel (108) has a conical surface truncated by the funnel outlet (130).

8. The coffee grinder (40) of claim 6, wherein the downwardly-facing outlet (106) and the funnel outlet (130) each have a circular segment profile, and the funnel (108) has a conical surface truncated by a substantially planar surface (126), and
wherein preferably, the substantially planar surface (126) has an angle of inclination of at least about 40 degrees and the downwardly-facing outlet (106) has an opening size of at least about 2.5 square inches.

9. The coffee grinder (40) of any one of claims 6 to 8, wherein the lower portion (114) includes a stop that limits relative rotation between the upper portion (112) and lower portion (114) to within a range of rotational angles that incorporates the open and closed configurations of the closure mechanism (110).

10. The coffee grinder (40) of any one of claims 5 to 9, wherein:
the coffee grinder bin (100) includes a removable lid (116) and the upwardly-facing inlet (104) is disposed on the removable lid (116); or
the upper portion (112) and lower portion (114) are removably coupled to one another through a snap fit coupling, or the upper portion (112) and lower portion (114) are removably coupled to one another through a keyed coupling.

11. The coffee grinder (40) of any one of claims 1 to 10, wherein the closure mechanism (110) is biased to the closed configuration.

12. The coffee grinder (40) of any one of claims 1 to 11, wherein the funnel (108) includes a funnel outlet (130) opposing the downwardly-facing outlet (106) and the closure mechanism (110) includes a door (262) that is interposed between the funnel outlet (130) and the downwardly-facing outlet (106) when the closure mechanism (110) is in the closed configuration.

13. The coffee grinder (40) of claim 12, wherein the door (262) is pivotable about a pivot axis and includes a bias mechanism that biases the door (262) to a closed position that blocks the downwardly-facing outlet (106), and
wherein preferably:
the closure mechanism (110) further includes an actuator configured to pivot the door (262) from the closed position to an open position that uncovers the downwardly-facing outlet (106); or
the door (262) includes a cam surface and the actuator includes a button (268) configured to move along a button axis (B) to engage the cam surface and thereby pivot the door (262) from the closed position to the open position.

14. A coffee grinder bin (100), comprising:
a container body (102) sized and configured to be removably positioned underneath a grinder outlet (46) of a coffee grinder to receive the ground coffee dispensed through the grinder outlet (46), the container body (102) defining an upwardly-facing inlet (104) configured to receive the ground coffee dispensed through the grinder outlet (46) and a downwardly-facing outlet (106) configured to dispense the ground coffee received through the upwardly-facing inlet (104);
a funnel (108) disposed within the container body (102) and configured to convey the ground coffee received through the upwardly-facing inlet (104) to the downwardly-facing outlet (106), the funnel (108) narrowing in cross-section in a direction from the upwardly-facing inlet (104) to the downwardly-facing outlet (106); and
a closure mechanism (110) movable between closed and open configurations, wherein in the closed configuration, the closure mechanism (110) substantially blocks the downwardly-facing outlet (106) to retain the ground coffee received through the upwardly-facing inlet (104) within the container body (102), and in the open configuration, the closure mechanism (110) substantially uncovers the downwardly-facing outlet (106) to allow the ground coffee received through the upwardly-facing inlet (104) to be dispensed through the downwardly-facing outlet (106).

15. A method of dispensing coffee grounds, comprising:
positioning a coffee grinder bin (100) in a grinding position disposed underneath a grinder outlet (46) of a coffee grinder, the coffee grinder bin (100) including a container body (102) defining an upwardly-facing inlet (104) and a downwardly-facing outlet (106) and a closure mechanism (110) that substantially blocks the downwardly-facing outlet (106) when in a closed configuration;
grinding coffee beans with the coffee grinder when the coffee grinder bin (100) is positioned underneath the grinder outlet (46) and the closure mechanism (110) is in the closed configuration to dispense ground coffee out of the grinder outlet (46) and into the container body (102) through the upwardly-facing inlet (104);
removing the coffee grinder bin (100) from the grinding position and positioning the coffee grinder bin (100) over a brewing receptacle; and
actuating the closure mechanism (110) to move the closure mechanism (110) from the closed configuration to an open configuration that substantially uncovers the downwardly-facing outlet (106) such that the ground coffee dispensed into the container body (102) is dispensed through the downwardly-facing outlet (106) and into the brewing receptacle.
